# EUROPEAN PATENT APPLICATION

(11) **EP 0 990 978 A2**
(43) Date of publication of application: **05.04.2000**
(21) Application number: 99307729.6
(22) Date of filing: 30.09.1999
(51) Int. Cl.: G06F 3/00, G06F 3/033

(54) **Information processing apparatus, method and computer program for virtual reality object management using auras**

(30) Priority: 30.09.1998 JP 27706698
(71) Applicant: SONY CORPORATION, Tokyo (JP)
(72) Inventor: Matsuda, Satoru, Shinagawa-ku, Tokyo (JP)
(74) Representative: Nicholls, Michael John

(57) **Abstract**

A matrix object management cable contains information which is prepared for each of objects 1 to N in a 3-dimensional virtual space to indicate whether or not an aura of every object includes each other object. To be more specific, if an object B is included in the aura of an object A, "1" is placed at the point of intersection of a column representing the object A and a row representing the object B. Otherwise. "0" is put at the point. As a result, the status of inclusion and exclusion of every object in an aura of each other object can be recognized at a high speed.

## Description

The present invention relates to an information processing apparatus, an information processing method and a computer program. More particularly, the present invention relates to an information processing apparatus, an information processing method and a computer program which enable high-speed formation of a judgment for each object as to whether or not every other object enters or departs from the aura of the object.

A conventional cyberspace service called Habitat (a trademark) is known in the field of the so-called PC (personal computer) communication service such as NIFTY-Serve (a trademark) and CompuServe (a trademark) in which a plurality of users connect their PCs to a central host computer through modems and a public telephone-line network to make accesses to the host computer in accordance with a predetermined communication protocol.

Lucas Film, Inc. started development of Habitat in the year of 1985. And after an operation of Habitat by Quantum Link. Inc., a commercial network company, for about 3 years, NIFTY-Serve started a Habitat service as Fujitsu Habitat (a trademark) in February 1990. In Habitat, a parturition of the user which is an object representing the user itself is put in a virtual city called a Populopolis which is rendered by 2-dimensional graphics, allowing the user to have, among others, a chat with another user. The parturition of the user is referred to as an avatar which originally means the incarnation of a Hindu deity appearing in an Indian myth. In this context, a chat is a real-time conversation based on texts which are displayed on a screen as a result of operations to enter characters via a keyboard. A more detailed description of Habitat is found in Michael Benedikt, ed., Cyberspace: First Steps 282-307 (1991).

In a conventional cyberspace system operated in a PC communication service of this type, states of a row of houses on a street and rooms in each of the houses in the virtual city are rendered by 2-dimensional graphics so that, in order to move an avatar inward or outward with respect to the background of a 2-dimensional graphic, the avatar is merely moved up and down over the background. That is to say, the power of display expression is poor for a pseudo experience of a walk or a movement in the virtual space. In addition, since the virtual space, in which the avatar representing the user itself and another avatar are displayed, is seen from a station point of a third person, the sense of a pseudo experience is also lost in this respect.

In order to eliminate the short comings described above, a function to display the virtual space by 3-dimensional graphics and to allow the user to walk about in the space with a high degree of freedom as seen from a station point of the avatar is implemented by utilizing a descriptive language of 3-dimensional graphic data called a VRML (Virtual Reality Modeling Language) as is disclosed in U.S. Patent Application No. 08/678,340. Details of the VRML are described in references such as Mark Pesce, VRML: Browsing and Building Cyberspace (1995), and "Recent Trends in VRML and CyberPassage" authored by Kohichi Matsuda and Yasuaki Honda, bit (Kyoritsu publication)/1996, Vol. 28, No. 7, pages 29 to 36, No 8, pages 57 to 65, No.9, pages 29 to 36 and No. 10, pages 49 to 58.

In addition, official and complete specifications of Version 2.0 of the Virtual Reality Modeling Language (ISO/IEC CD 14772) are disclosed on a home page at 〈http://www.vrml.org/Specifications/VRML2.0/FINAL/spec/index.html〉.

VRML2.0, the most recent version of the VRML, can be used to describe and express an autonomous behavior of an object in a 3-dimensional virtual space. Thus, in a behavior to walk about in a virtual space displayed by 3-dimensional graphics in a browser for VRML2.0, that is, a 3-dimensional virtual space, as seen from the station point of the avatar, the user is allowed to have a feeling as if the user itself were actually walking about the 3-dimensional space.

A typical browser for VRML2.0 and software for a shared server are a Community Place (a trademark) Browser/Bureau developed as a product by Sony Corporation which is the assignee of the present application. Its β-version (a prototype) can be downloaded from a home page at 〈http://vs.sony.co.jp〉.

By the way, even though there are avatars and objects representing a plurality of users in a 3-dimensional virtual space, the actually displayed 3-dimensional virtual space includes only some of the avatars and objects so that information on positions of objects including avatars located far away from the avatar of the user itself is not required for the time being. By limiting the number of objects with which information is to be exchanged through consideration of the processing powers of PCs in use and the communication capacity of the network, the 3-dimensional virtual space can be displayed in a short period of time.

As a technique to limit the number of objects, there is a method whereby a spherical space with a predetermined radius is set to enclose each object and data such as information on positions is exchanged only with other objects in the spherical space.

With the above technique, however, it is necessary to form a judgment for each object as to whether or not every other object is located in its own spherical space, raising a problem of the long time it takes to form such a judgment.

According to one aspect of the present invention, an information processing apparatus operates a plurality of objects in a 3-dimensional virtual space and moves the plurality of objects in the 3-dimensional virtual space. The information processing apparatus includes a list management means, a matrix table management means, and a judgment means. The list management means controls a first list prepared for each of the plurality of objects to enlist a first group of one or more other of the plurality of objects contained in an aura of a first object of the plurality of objects. and controls a second list prepared for each of the plurality of objects to enlist a second group of the one or more other of the plurality of objects each having an aura containing the first object. The matrix table management means controls a status of inclusion of each of the plurality of objects in an aura of each other of the plurality of objects by using a matrix table. The judgment means forms a judgment as to whether the first object has entered or departed from the aura of each other of the plurality of objects by referring to the matrix table, the first list and the second list.

An aura will be described later.

According to another aspect of the present invention, an information processing method operates a plurality of objects in a 3-dimensional virtual space and moves the plurality of objects in the 3-dimensional virtual space The method includes a list management step. a matrix table management step, and a judgment means. The list management step controls a first list prepared for each of the plurality of objects to enlist a first group of one or more other of the plurality of objects contained in an aura of a first of the plurality of objects, and controls a second list prepared for each of the plurality of objects to enlist a second group of the one or more other of the plurality of objects each having an aura containing the first object. The matrix table management step controls a status of inclusion of each of the plurality of objects in an aura of each other of the plurality of objects by using a matrix table. The judgment step forms a judgment as to whether the first object has entered or departed from the aura of each other of the plurality of objects by referring to the matrix table, the first list and the second list.

According to yet another aspect of the present invention, a computer-readable medium presents a program executable by a computer to drive an information processing apparatus for operating a plurality of objects in a 3-dimensional virtual space and moving said plurality of objects in the 3-dimensional virtual space. The program to carries out processing including a list management step, a matrix cable management step, and a judgment step. The list management step controls a first list prepared for each of the plurality of objects to enlist a first group of one or more other of the plurality of objects contained in an aura of a first object of the plurality of objects. and controls a second list prepared for each of the plurality of objects to enlist a second group of the one or more other of the plurality of objects each having an aura containing the first object. The matrix table management step of controls a status of inclusion of each of the plurality of objects in an aura of each other of the plurality of objects by using a matrix cable. The judgment step forms a judgment as to whether the first object has entered or departed from the aura or each other of the plurality of objects by referring to the matrix table, the first list and the second list.

According to the present invention, there are provided a matrix table used for showing and for controlling status of inclusion of all objects of a 3-dimensional virtual space in an aura of each object, a list prepared for each object to enlist other objects included in an aura of the object for which the list is prepared and a list prepared for each object to enlist other objects each with an aura thereof including the object for which the list is prepared, wherein the matrix table and the lists are referred to in formation of a judgment as to whether or not an object has entered or departed from the aura of each other object so that it is possible to form a judgment for each object as to whether or not every other object enters or departs from the area of the object within a short period of time.

The hereinafter described embodiments enable formation of a judgement for each object as to whether or not every other object enters or departs from the area of the object within a short period of time.

A better understanding of the features and advantages of the present invention will be obtained by reference to the following detailed description of illustrative embodiments given by way of non-limitative example with reference to the drawings in which:
Fig. 1 is a block diagram showing a typical configuration of a system presenting a shared virtual space to which the present invention is applied;
Fig. 2 is a block diagram showing a typical configuration of a client PC employed in the system shown in Fig. 1;
Fig. 3 is an explanatory diagram used for describing the operation of the system shown in Fig. 1;
Fig. 4 is an explanatory diagram used for describing the operation of the system shown in Fig. 1;
Fig. 5 is an explanatory diagram used for describing the operation of the system shown in Fig. 1;
Fig. 6 is an explanatory diagram used for describing an aura;
Fig. 7 is an explanatory diagram used for describing sensing of an object accompanying a movement of an avatar;
Fig. 8 is an explanatory diagram used for describing mismatching sensations of avatars;
Fig. 9 is an explanatory diagram showing a matrix object management table;
Fig. 10 shows a table of object information;
Fig. 11 shows a flowchart representing object movement processing carried out by a shared server employed in the system shown in Fig. 1;
Fig. 12 shows a flowchart representing departure detection processing carried out at a step S1 of the flowchart shown in Fig. 11; and
Fig. 13 shows a flowchart representing entry detection processing carried out at a step S3 of the flowchart shown in Fig. 11.

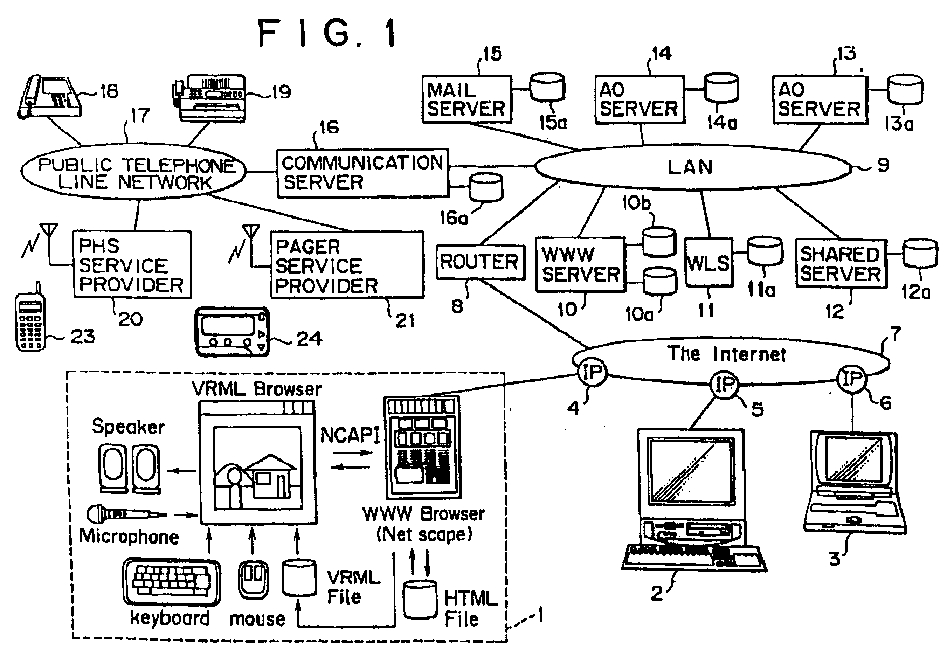

Fig. 1 is a block diagram showing a typical configuration of a system presenting a shared virtual space to which the present invention is applied. It should be noted that the system cited in this specification means an entity obtained as a result of logically putting a plurality of apparatuses in a set without regard to whether or nor the apparatuses are physically accommodated in a box.

As shown in Fig. 1, client PCs (personal computers) 1 to 3 are connected to the Internet 7 through IP's (Internet connection service providers) 4 to 6 respectively. In each of the client PCs 1 to 3, a VRML browser and a WWW browser are installed and ready to operate.

The client PCs 1 to 3 each have two functions, namely, a 3D-client function and a 2D-client function. The function for a 3D client is used to notify a shared server 12 periodically or when necessary of data such as information on the location of the client PC and to receive information shared by other 2D objects from the shared server 12. On the other hand, the function for a 2D client is executed to transmit a request for information to a WWW server 10 in accordance with an HTTP, to receive a response to the request from the WWW server 10 and to display mainly 2-dimensional information. When a URL is included in information received from the shred server 12, the 3D-client function issues a request for an access to the URL to the 2D-client function. At this request, the 2D-client function makes an access to the URL (in actuality to the WWW server 10) to download data such as the shape of an object and pass on the data to the 3D-client function.

A LAN (Local Area Network) 9 is connected to the Internet 7 through a router 8. Connected to the LAN 9 are the WWW server 10, a WLS (World Location Server) 11, the shared server 12, AO (Application Object) servers 13 and 14, a mail server 15 and a communication server 16. The WWW server 10 has hard discs (HDDs) 10a and 10b whereas the other servers 11 to 16 have HDDs 11a to 16a respectively.

It should be noted that the AO server 13 has a program for communicating with the shared server 12 to present for example an application object (AO) such as a robot or an electronic pet which moves autonomously in a virtual space. Much like the 3D-client function, the AO server 13 communicates with the shared server 12 to report information on itself and to receive information shared by other 3D objects.

The communication server 16 is connected to a telephone 18 or a facsimile 19 through a public telephone line network 17, to a PHS (Personal Handyphone System) terminal 23 through a PHS service provider 20 and to a pager terminal 24 through a pager service provider 21.

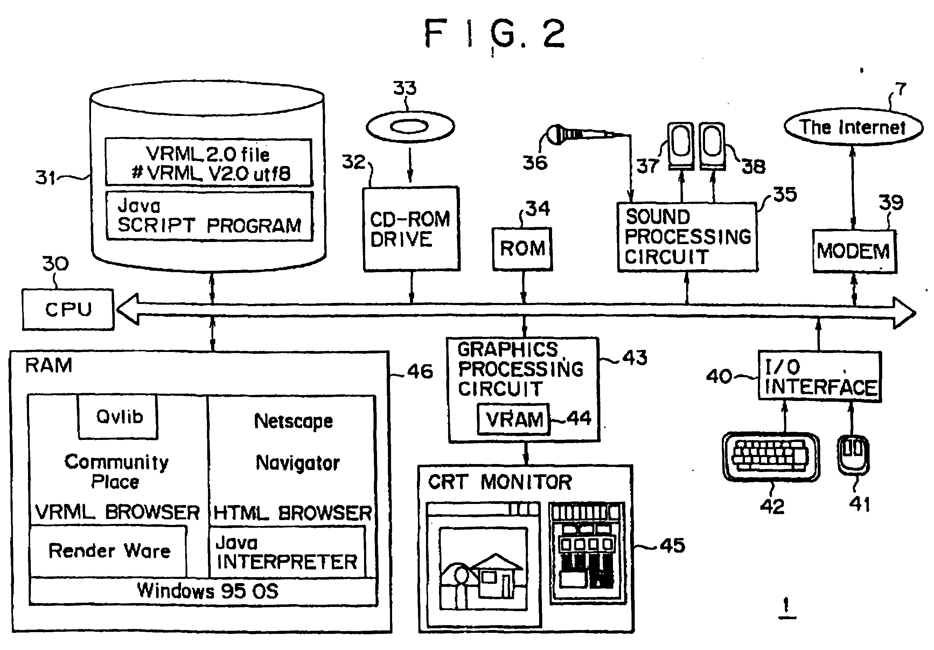

Fig. 2 is a block diagram showing a typical configuration of hardware of the client PC 1. in the configuration, a CPU 30 carries out various kinds of processing by executing a program stored in a ROM 34. A HDD 31 is used for storing, among other information, VRML contents such as VRML2.0 files and predetermined script programs written in the Java (a trademark of Sun Microsystems, Inc.) language. A CD-ROM drive 32 reads out VRML contents stored in a CD-ROM disc 33.

Connected to a microphone 36 as well as right and left speakers 37 and 38, a sound processing circuit 35 inputs a sound from the microphone 36 and outputs sounds such as music and operation messages to the speakers 37 and 38. A modem 39 (or other interface device) connected to the Internet 7 is used for exchanging data with the Internet 7. An I/O (input/output) interface 40 receives operation signals from a mouse 41 and a keyboard 42. A graphics processing circuit 43 includes an embedded VRAM 44 for storing picture data completing various kinds of processing. The graphics processing circuit 43 reads out data from the VRAM 44, outputting the data to a CRT monitor 45.

A Netscape Navigator browser, a Java interpreter and the Community Place Browser are loaded into a RAM 46 to be executed by the CPU 30. The Netscape Navigator browser is a WWW browser run under Windows 95 (a trademark of Microsoft. Inc.) and the Community Place Browser is a VRML2.0 browser developed by Sony Corporation, the assignee of the present application.

The VRML2.0 browser implements QvLib (which is a library for interpreting the VRML syntax or a parser developed and gratuitously opened to the public by Silicon Graphics. Inc.) and RenderWare (which is a software renderer developed by Criterion Software Ltd., a British company) or a parser and a renderer having capabilities equivalent to those of QvLib and RenderWare, respectively.

As shown in Fig. 1, the Community Place Browser exchanges various kinds of data with the Netscape Navigator serving as a WWW browser in accordance with a NCAPI (Netscape Client Application Programming Interface, a trademark).

The Netscape Navigator browser receives an HTML file and VRML contents (including a VRML tile and a script program written in the Java language) transmitted by the WWW server 10 by way of the Internet 7, storing the HTML file and the VRML contents in the local HDD 31. The Netscape Navigator browser processes the HTML. file, displaying a text and a picture obtained as a result of the processing on a CRT monitor 45. On the other hand, the Community Place Browser processes the VRML file to display a 3-dimensional virtual space on the CRT monitor 45 and changes behaviors of objects in the 3-dimensional virtual space and other display states in accordance with a result of execution of the script program by the Java interpreter.

It should be noted that the other client PCs 2 and 3 each have the same configuration as the client PC I even though the configurations of the PCs 2 and 3 are not shown explicitly in the figure.

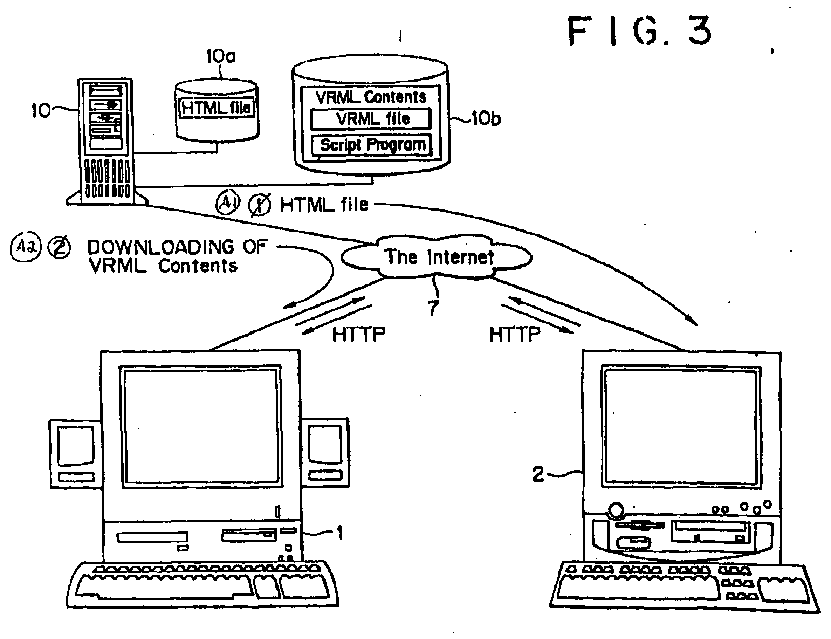

Next, the operation of the embodiment described above is explained by referring to Figs. 3 to 5. In the state shown in Fig. 3. first of all, a home page of a web site providing VRML contents is viewed by using the WWW browser as shown by reference number A1. In this example, the home page at 〈http://pc.sony.co.jp/sapari/〉 is accessed. Then, the user of the client PC 1 or 2 downloads VRML contents comprising a VRML2.0 file and a script program written in the Java language to express autonomous motions in a VRML space as shown by reference number A2.

It is needless to say that VRML contents can also be obtained by letting the CD-ROM drive 32 read out the contents from the CD-ROM disc 33.

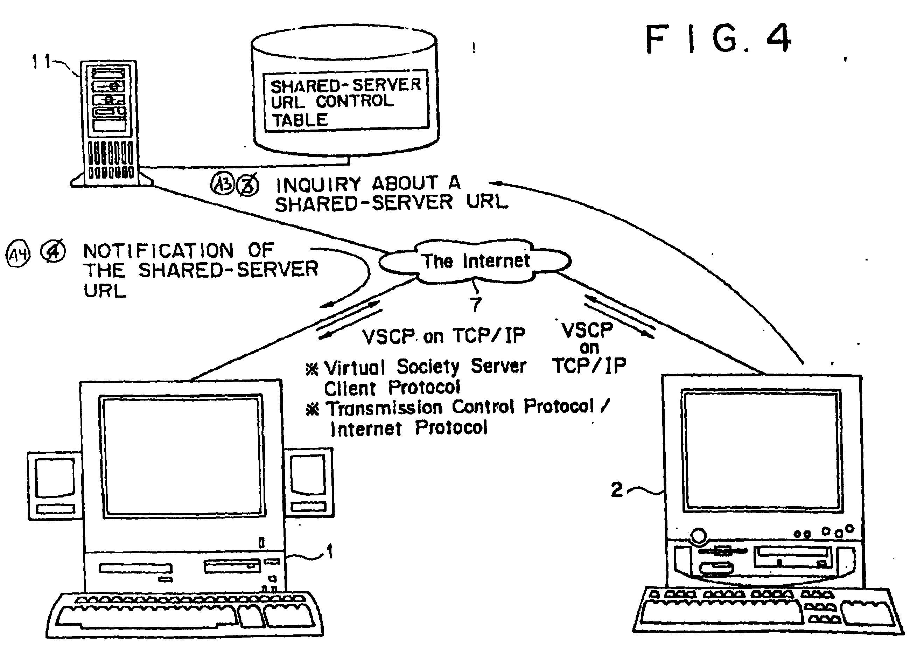

Then, the Community Place Browser serving as a VRML2.0 browser in the client PC 1 or 2 interprets and executes the VRML2.0 file downloaded and temporarily stored in the local HDD 31 as shown in Fig. 4 and, as indicated by reference number A3, an inquiry about the URL of the shared server 12 is transmitted to the WLS 11 in accordance with a VSCP (Virtual Society Server Client Protocol). Receiving the inquiry, the WLS 11 searches a shared server URL control table stored in the HDD 11a for the URL of the shared server 12 and transmits the URL to the client PC 1 or 2 in response to the inquiry as indicated by reference number A4.

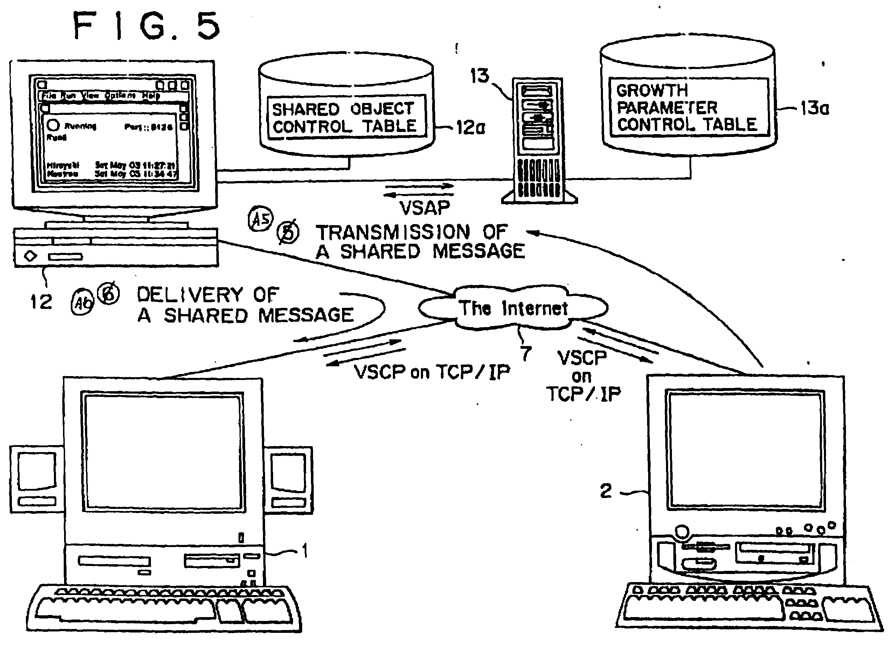

The URL is used to connect the client PC 1 and 2 to the shared server 12 as shown in Fig. 5. As a result, a shared message on attributes of a shared 3D object such as the position and the motion thereof is transmitted by way of the shared server 12 as indicated by reference number A5 and the shared message is transferred as indicated by reference number A6 In this way, a multi-user environment is implemented.

For a detailed description of the above connection procedure, refer to U.S. Patent Application No. 08/678,340.

While the 3-dimensional virtual space is used in a multi-user environment in this case, the 3-dimensional virtual space may be used in an environment other than a multi-user environment as well. That is to say, the 3-dimensional virtual space may be used in an environment which is referred to hereafter as a single-user environment for the sake of convenience. In a single-user environment, the avatar of another user is not allowed to appear in the 3-dimensional virtual space and the avatar of this particular user is not allowed to appear in the 3-dimensional virtual space of the client PC of the user other than the particular user initiating the pieces of processing indicated by reference numbers A1 and A2. For the sake of convenience, the avatar of the other user and the avatar of the particular user are referred to as a drawn avatar and a pilot avatar, respectively. In order to establish a single-user environment. it is not necessary to carry out the pieces of processing indicated by reference numbers A3 to A6.

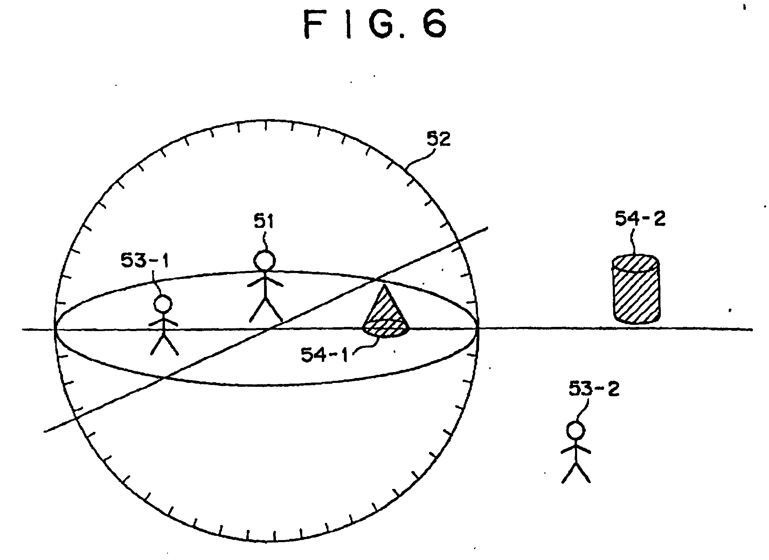

Next, an aura is explained by referring to Fig 6. As shown in the figure, an aura 52 with a spherical shape having a predetermined radius is formed around a pilot avatar 51 with the center of the sphere coinciding with pilot avatar 51. The pilot avatar 51 is capable of receiving information from another object located inside the aura 52. That is to say, the pilot avatar 51 is capable of visually recognizing a drawn avatar 53-1 and an application object (AO) 54-1 which are located inside the aura 52. To put it concretely, the images of the drawn avatar 53-1 and the object 54-1 are displayed on the CRT monitor of the client PC of the pilot avatar 51. However, the pilot avatar 51 is not capable of visually recognizing a drawn avatar 53-2 and an application object (AO) 54-2 which are located outside the aura 52. To put it concretely, the images of the drawn avatar 53-2 and the object 54-2 are not displayed on the CRT monitor of the client PC of the pilot avatar 51.

By the same token, an aura is also set for each of the other objects, namely, the drawn avatar 53-1 and the object 54-1, the drawn avatar 53-2 and the object 54-2. in this system, the size of each aura is uniform for all client PCs. It should be noted, however, that the aura of an AO can be set with a size different from the aura of the avatar if necessary. Furthermore, the shape of each aura may be other than spherical if so desired.

With the aura 52 prescribed as described above, it becomes necessary for the pilot avatar 51 to acquire information from the drawn avatar 53-1 and the object 54-1 but not from the drawn avatar 53-2 and the object 54-2 which are located outside the aura 52. The amount of information to be received can thus be limited.

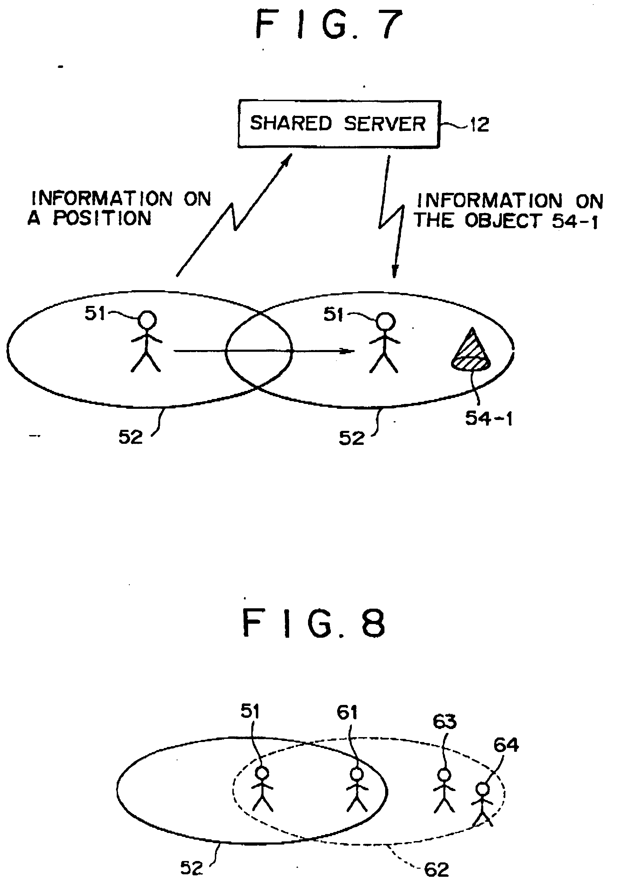

Consider an example shown in Fig. 7 When the avatar 51 moves, information on its new position is transmitted to the shared server 12. Receiving the information on the new position, the shred server 12 identifies what objects (including avatars) are located inside the aura 52 centered at the new position of the avatar 51 and transmits information on the objects to the client PC of the avatar 51. In the example shown in Fig 7, since an object 54-1 is identified as an object located inside the aura 52 centered at the new position of the avatar 51 after the motion, the shared server 12 transmits information on the object 54-1 to the client PC of the avatar 51. Receiving the information on the object 54-1. the client PC of the avatar 51 displays the image of the object 54-1, allowing the user of the avatar 51 to visually recognize the object 54-1.

If a large number of objects exist in the world (the virtual space), there may also be many objects located inside the aura 52, increasing the amount of information to be received. In order to prevent the amount of information to be received from exceeding what is really required. a maximum number of objects in an aura that can be visually recognized by the avatar of the aura is set in advance to be controlled by the shared server 12. As a result, only information on the number of objects not exceeding the maximum is transmitted. For example, assume that the maximum number of objects in the aura 52 that can be visually recognized by the avatar 51 is set at two and there are three or more objects located inside the aura 52. In this case, only the two objects that are included first or at earliest times are taken into account That is to say, information on the third and subsequent objects included after the second one is not reported to the avatar 51. The maximum number of objects in the aura 52 that can be visually recognized by the avatar 51 is set in advance at a value predetermined by, among other limiting factors, a limit on resources in the client PC for the avatar 51 and a limit on a transmission band of a network between the client PC and the shared server 12.

It should be noted, however, that the maximum number of objects in the aura 52 that can be visually recognized by the avatar 51 may be the number of objects excluding AOs (application objects) moving autonomously in the world. Thus, the avatar 51 may be always capable of visually recognizing such an AO even if the number of objects included in the aura 52 has already reached the maximum.

Incidentally, if a maximum limit is imposed on the number of objects in an aura that can be visually recognized by the avatar of the aura as described above, it will be quite within the bounds of possibility that imposition of such a limit results in a state of mismatching, that is, a state in which the avatar of the aura is not capable of visually recognizing another avatar in spite of the fact that the other avatar is capable of visually recognizing the avatar of the aura.

The state of mismatching cited above is exemplified by the following case- Assume that an avatar 51 enters an aura 62 of an avatar 61 after avatars 63 and 64 have already been included in the aura 62 as shown in Fig. 8. In this case, the avatar 51 visually recognizes the avatar 61 due to the fact that the avatar 61 is the only avatar other than avatar 51 in an aura 52 of the avatar 51. On the other hand, the avatar 61 is not capable of visually recognizing the avatar 51 due to the fact that, when the avatar 51 enters the aura 62, the maximum number of avatars that can be recognized by the aura 61 in the aura 62 has been reached by the existence of the two other avatars 63 and 64 in the aura 62. Thus, when the third avatar 51 newly enters the aura 62, the avatar count exceeds the maximum number of two, making the avatar 61 incapable of visually recognizing the avatar 51. As a result, the avatar 61 is not capable of visually recognizing the avatar 51 in spite of the fact that the avatar 51 is capable of visually recognizing the avatar 61. Thus, for example, the avatar 51 is capable of requesting the avatar 61 to have a chat with the avatar 61 but the avatar 61 is not capable of accepting the request made by the avatar 51.

In order to avoid such a state of mismatching, the system is designed so that, if the avatar 51 is capable of visually recognizing the avatar 61, the avatar 61 is also made capable of visually recognizing the newly entering avatar 51 even in a state in which the presence of the avatar 51 causes the avatar count in the aura 62 to exceed the maximum value thereof. It is thus possible to avoid a state of mismatching in which a specific avatar in an aura is not capable or visually recognizing another avatar in the aura in spite of the fact that the other avatar is capable of visually recognizing the specific avatar.

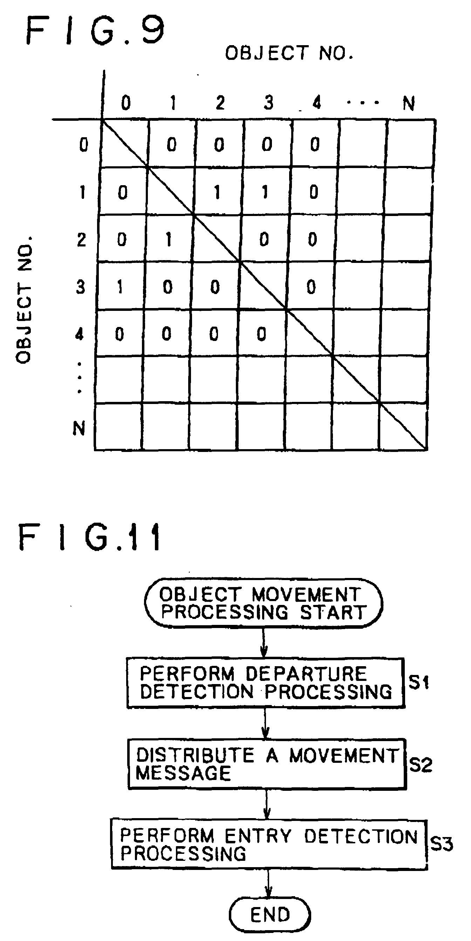

Fig. 9 is an explanatory diagram showing a matrix object management table controlled by the shared server 12. The matrix object management table contains information which is prepared for each of objects 0 to N in a 3-dimensional virtual space to indicate whether or not other objects are included in the aura of the object. To be more specific, if an object B is included in the aura of an object A, "1" is placed at the point of intersection of a column representing the object A and a row representing the object B. Otherwise, "0" is put at that point.

In the matrix object management table shown in Fig. 9, object #3 is included in the aura of object #0 and object #2 is included in the aura of object #1.

When an avatar (or object) moves, entering the aura of another object or, inversely, causing another object to be included in the aura of the avatar (or object) itself, the matrix object management table is referenced to identify other objects each having an aura including the moving avatar and other objects included in the aura of the moving avatar. The contents of the matrix object management table related to the avatar and the identified other objects are updated by the shared server 12 in accordance with the movement The shared server 12 forms a judgment as to whether or not an object is included in the aura of an avatar by comparison of the radius of the aura with the distance between the avatar and the object which can be found from the coordinates of the positions of the avatar and the object. By the same token, the shared server 12 forms a judgment as to whether or not an avatar is included in the aura of an object by comparison of the radius of the aura with the distance between the avatar and the object which can be found from the coordinates of the positions of the avatar and the object.

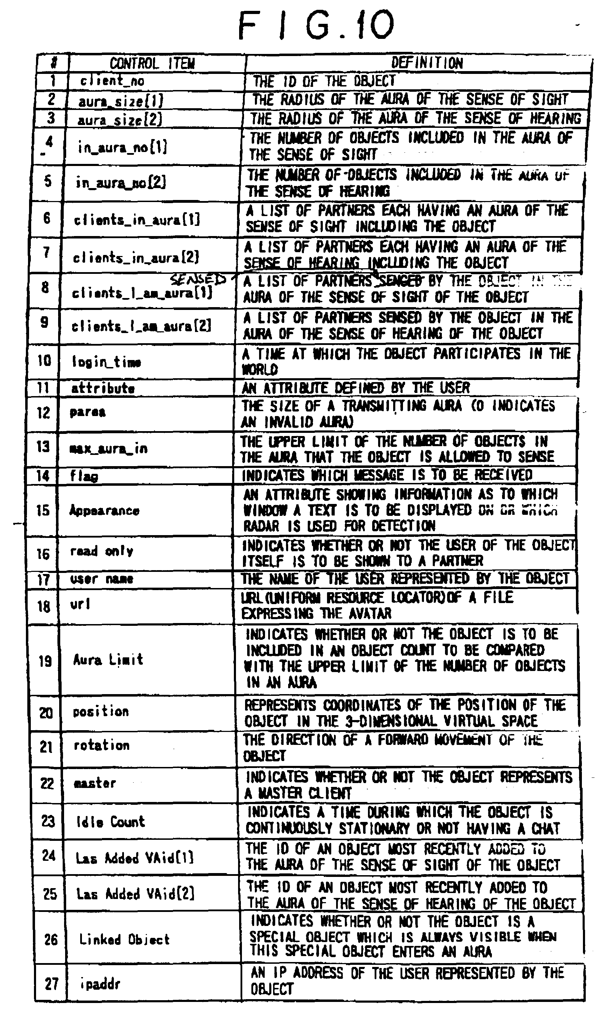

Fig. 10 shows a table of pieces of object information controlled by the shared server 12 for each object. A "client_no" is the ID of an object. Pieces of information following the "client_no" are information on the object indicated by the "client_no". An "aura_size[1]" is the radius of the aura of the sense of sight and an "aura_size[2]" is the radius of the aura of the sense of hearing.

An "in_aura_no[1]" is the number of objects included in the aura of the sense of sight and an "in_aura_no[2]" is the number of objects included in the aura of the sense of hearing.

A "clients_in_aura[1]" is a list of partners (e.g., other objects or avatars in the virtual reality space) each having an aura of the sense of sight including the object A "clients_in_aura(2]" is a list of partners each having an aura of the sense of hearing including the object. The object is thus sensed by the partners. It should be noted that the "clients_in_aura[1]" or the "clients_in_aura[2]" is referred to hereafter as a list L2. The list L2 also corresponds to one column of information in Fig. 9.

A "clients_I_am_aura[1]" is a list of partners sensed by the object in the aura of the sense of sight of the object and a "clients_I_am_aura[2]" is a list of partners sensed by the object in the aura of the sense of hearing of the object. The object thus senses the partners. It should be noted that the "clients_I_am_aura[I]" or the "clients_I_am_aura[2]" is referred to hereafter as a list L1. The list L1 corresponds to one row of information in Fig. 9.

A "login_time" is a time at which the object participates in the world (3-dimensional virtual space). An attribute is an attribute defined by the user A "parea" is the size of a transmitting aura. A parea value of 0 indicates an invalid aura. A "max_aura_in" is the upper limit of the number of objects in the aura that the object is allowed to sense. A "flag" indicates the type of a message to be received. An "Appearance" is an attribute showing information as to which window a text is to be displayed on or which radar is used for detection.

A "read only" indicates whether or not the user of the object itself is to be shown to a partner. A "user name" is the name of the user represented by the object A "url" is a URL (Uniform Resource Locator) of a file expressing the avatar. An "Aura Limit" indicates whether or not the object is to be included in an object count to be compared with the upper limit of the number of objects in an aura. A "position" represents coordinates of the position of the object in the 3-dimensional virtual space. A "rotation" is the direction of a forward movement of the object.

A "master" indicates whether or not the object represents a master client. An "Idle Count" indicates a time during which the object is continuously stationary or not having a chat. A "Las Added VAid[1]" is the ID of an object most recently added to the aura of the sense of sight of the object and a "Las Added VAid[2]" is the ID of an object most recently added to the aura of the sense of hearing of the object.

A "Linked Object" indicates whether or not the object is a special object which is always visible when this special object enters an aura. An "ipaddr" is an IP address of the user represented by the object.

When an object (or an avatar) moves, the shared server 12 forms a judgment as to whether or not the object departs from the aura of another object or another object is excluded from the aura of the moving object by referring to the object information described above.

Next, object movement processing carried out by the shared server 12 is explained by referring to a flowchart shown in Fig. 11. The object movement processing is carried out by the shared server 12 typically when the user enters a command to move an object (avatar) A to the VRML browser activated in the client PC 1 and its information is transmitted to the shared server 12 by way of the Internet 7.

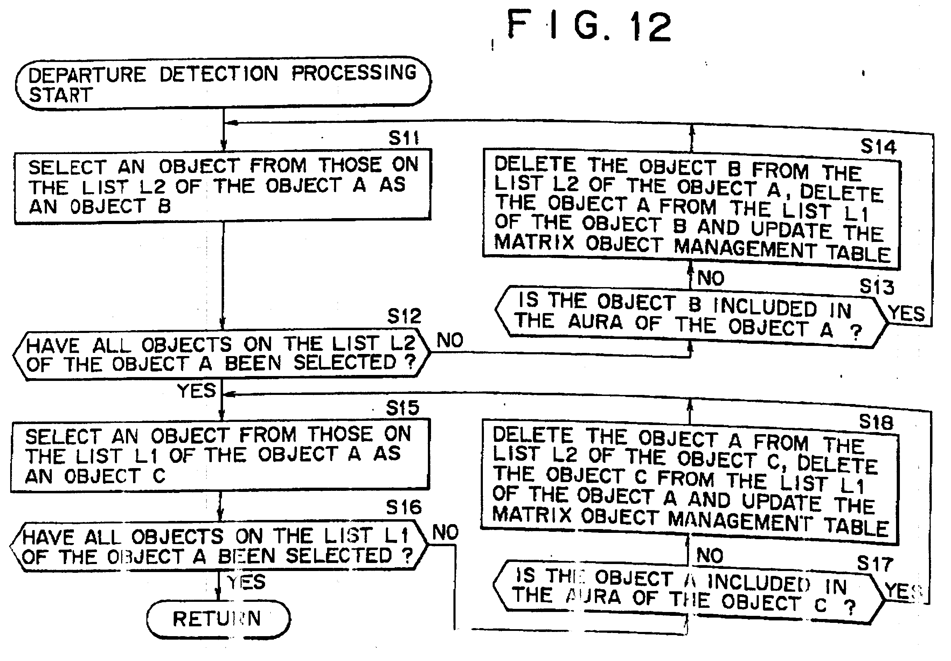

As shown in the figure, the flowchart begins with a step S1 in which the shared server 12 forms a judgment as to whether or not a movement of the object A causes the object A to depart from the aura (which can be the aura of the sense of sight or hearing) of another object or another object is excluded from the aura of the object A. The formation of the judgment as to whether or not the movement of the object A causes the object A to depart from the aura of another object or another object is excluded from the aura of the object A is explained by referring to a flowchart shown in Fig. 12 as follows.

As shown in Fig. 12, the flowchart begins with a step S11 in which the shared server 12 selects an object from those on the list L2 of the object A as an object B. As described earlier, the list L2 of the object A is the clients_in_aura list of partners which are located in the aura of the object A and, hence, sensed by the object A.

The flow of the processing then goes on to a step S12 in which the shred senor 12 forms a judgment as to whether or not all objects on the list L2 of the object. A have been selected at the step S11. If all objects on the list L2 of the object A have not been selected yet at the step S11, the flow of the processing goes on to a step S13.

At the step S13, the shared server 12 reads out the post-movement position and the size of the aura (aura_size) of the object A as well as the position of the object B from the pieces of object information for the object A and the object B to form a judgment as to whether or not the object B is still included in the aura of the object A. If the object B is not included in the aura of the object A anymore, the flow of the processing goes on to a step S14.

At the step S14, the shared server 12 deletes the object B from the list L2 of the object A and deletes the object A from the list L1 of the object B since the object B is no longer in the aura of the object A. As described earlier, the list L1 of the object B is a clients_I_am_aura list of partners each having an aura including the object B. The shared sever 12 further updates information in the matrix object management table related to the changes in contents of the lists L1 and L2 described above. To be more specific, the shared server 12 puts 0 at the point of intersection of a column representing the object A and a row representing the object B.

It should be noted that, if the outcome of the judgment formed at the step S13 indicates that the object B is still included in the aura of the object A, on the other hand, it is not necessary to delete the object B from the list L2 of the object A and delete the object A from the list L1 of the object B. In this case, the flow of the processing goes back to the step S11, skipping the processing of the step S14.

Thereafter, the pieces of processing of the steps S11 to S14 are carried out repeatedly as long as the outcome of the judgment formed at the step S12 indicates that objects on the list L2 of the object A have not all been selected yet. As all objects on the list L2 of the object A have been selected, the flow of the processing goes on to a step S15.

At the step S15, the shared server 12 selects an object from chose on the list L1 of the object A as an object C. As described earlier, the list L1 of the object A is the clients_I_am_aura list of partners each having an aura including the object A.

The flow of the processing then goes on to a step S16 in which the shared server 12 forms a judgment as to whether or not all objects on the list L1 of the object A have been selected at the step S15. If all objects on the list L1 of the object A have not been selected yet at the step S15, the flow of the processing goes on to a step S17.

At the step S17 the shared server 12 reads out the post-movement position of the object A as well as the position and the size of the aura of the object C from the pieces of object information for the object A and the object C to form a judgment as to whether or not the object A is still included in the aura of the object C. If the object A is not included in the aura of the object C anymore, the flow of the processing goes on to a step S18.

At the step S18, the shared server 12 deletes the object A from the list L2 of the object C and deletes the object C from the list L1 of the object A since the object A is no longer in the aura of the object C. As described earlier, the list L2 of the object C is a list of partners included in the aura of the object C. The shared sever 12 further updates information in the matrix object management table related to the changes in contents of the lists L1 and L2 described above. To be more specific, the shared server 12 puts 0 at the point of intersection of a column representing the object C and a row representing the object A.

It should be noted that, if the outcome of the judgment formed at the step S17 indicates that the object A is still included in the aura of the object C. on the other hand, it is not necessary to delete the object A from the list L2 of the object C and delete the object C from the list L1 of the object A. In this case, the flow of the processing goes back to the step S15, skipping the processing of the step S18.

Thereafter, the pieces of processing of the steps S15 to S18 are carried out repeatedly as long as the outcome of the judgment formed at the step S16 indicates that objects on the list L1 of the object A have not all been selected yet. As all objects on the list L1 of the object A have been selected, the flow of the processing goes back to a step S2 of the flowchart shown in Fig. 11.

Refer back to the flowchart shown in Fig. 11. At the step S2, the shared server 12 distributes a movement message (such as information on the position of the destination of the movement) of the object A to client PCs operated by users represented by objects (avatars) on the list L1 and the list L2 of the object A.

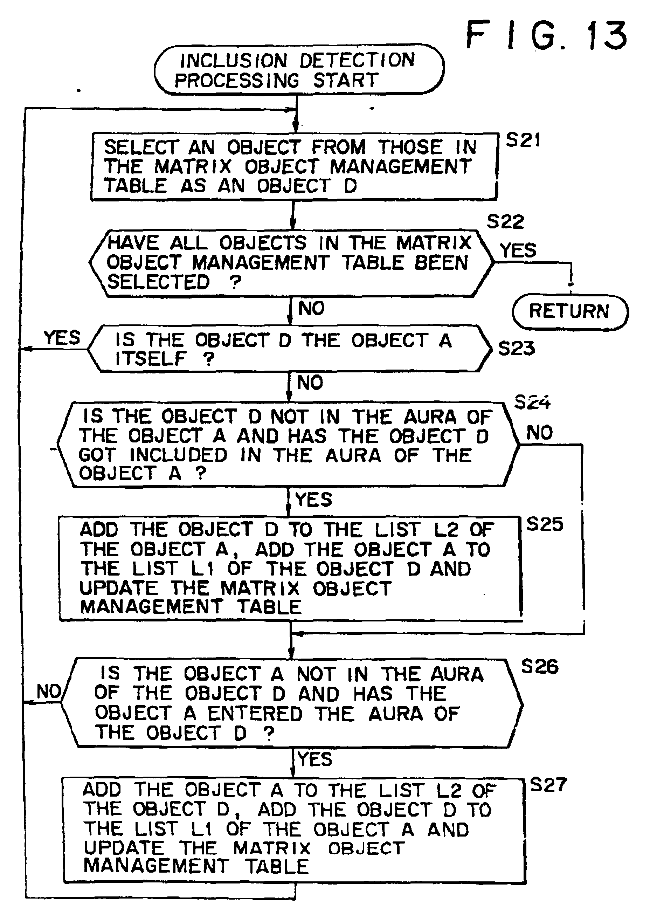

The flow of the processing then goes on to a step 53 in which the shared server 12 forms a judgment as to whether or not a movement of the object A causes the object A to enter the aura (which can be the aura of the sense of sight or bearing) of another object or to include another object in the aura of the object A. The formation of the judgment as to whether or not a movement of the object A causes the object A to enter the aura of another object or to include another object in the aura of the object A is explained by referring to a flowchart shown in Fig. 13 as follows.

As shown in Fig. 13, the flowchart begins with a step S21 in which the shared server 12 selects an object from those in the matrix object management table as an object D.

The flow of the processing then goes on to a step S22 in which the shared server 12 forms a judgment as to whether or not all objects in the matrix object management table have been selected at the step S21. If all objects in the matrix object management table have not been selected yet, the flow of the processing then goes on to a step S23.

At the step S23, the shared server 12 forms a judgment as to whether or not the object D is the object A itself. If the object D is the object A itself, the flow of the processing goes back to a step S21. If the object D is not the object A itself, on the other hand, the flow of the processing goes on to a step S24.

At the step S24, the shared server 12 refers to the matrix object management table to form a judgment as to whether or not the object D is in the aura of the object A, that is, to find out whether 1 is recorded at the point of intersection of a column representing the object A and a row representing the object D in the matrix object management table. In addition, the shared server 12 also reads out the post-movement position and the size (aura_size) of the object A as well as the position of the object D from the respective pieces of object information to form a judgment as to whether or not the object D was included in the aura of the object A after the movement of the object A. If the outcome of the judgment indicates that the object D is not located in the aura of the object A, that is, 0 is recorded at the point of intersection of a column representing the object A and a row representing the object D in the matrix object management table but the object D was included in the aura of the object A after the movement of the object A, the flow of the processing goes on to a step S25.

At the step S25, the shared server 12 adds the object D to the list L2 of the object A and adds the object A to the list L1 of the object D since the object D is now included in the aura of the object A. The shared sever 12 further updates information in the matrix object management table related to the changes in contents of the lists L1 and L2 described above. To be more specific, the shared server 12 puts 1 at the point of intersection of a column representing the object A and a row representing the object D.

The flow of the processing then goes on to a step S26. At the step S26, the shared server 12 refers to the matrix object management table to form a judgment as to whether or not the object A is in the aura of the object D, that is, to find out whether 1 is recorded at the point of intersection of a column representing the object D and a row representing the object A in the matrix object management table. In addition, the shared server 12 also reads out the post-movement position of the abject A as well as the position and the size (aura_size) of the object D from the respective pieces of object information to form a judgment as to whether or not the object A has entered the aura of the object D after the movement of the object A. It the outcome of the judgment indicates that the object A is not located in the aura of the object D, that is, 0 is recorded at the point of intersection of a column representing the object D and a row representing the object A in the matrix object management table but the object A has entered the aura of the object D after the movement of the object A, the flow of the processing goes on to a step S27.

At the step S27, the shared server 12 adds the object A to the list L2 of the object D and adds the object D to the list L1 of the object A since the object A is now included in the aura of the object D. The shared sever 12 further updates information in the matrix object management table related to the changes in contents of the lists L1 and L2 described above. To be more specific, the shared server 12 puts 1 at the point of intersection of a column representing the object D and a row representing the object A.

It should be noted that, if the outcome of the judgment formed at the step S24 indicates that the object D is located in the aura of the object A, that is. 1 is recorded at the point of intersection of a column representing the object A and a row representing the object D in the matrix abject management cable or the object D is not included in the aura of the object A after the movement of the object A, on the other hand, the flaw of the processing goes on directly to the step S26, skipping the step S25 since cataloging is not required. The flow of the processing from the step S24 to the step S26 skipping the step S25 may represent a case in which the object D has been excluded from the aura of the object A due to the movement of the object A. In this case, the matrix object management table is updated at the step S14 of the departure detection processing represented by the flowchart shown in Fig. 12.

By the same token, if the outcome of the judgment formed at the step S26 indicates that the object A is located in the aura of the object D, that is, 1 is recorded at the point of intersection of a column representing the object 0 and a row representing the object A in the matrix object management table or the object A is not included in the aura of the object D after the movement of the object A, on the other hand, the flow of the processing goes back to the step S21, skipping the step S27 since cataloging is not required. The flow of the processing from the step S26 back to the step S21 skipping the step S27 may represent a case in which the object A has departed from the aura of the object D due to the movement of the object A. In this case, the matrix object management table is updated at the step S18 of the departure detection processing represented by the flowchart shown in Fig. 12.

Thereafter, the pieces of processing of the steps S21 to S27 are carried out repeatedly till all objects recorded in the matrix object control table are selected at the step S22. As the outcome of the judgment formed at the step S22 indicates that all objects recorded in the matrix object control table have been selected, the control is returned to the calling program.

As described above, in this embodiment, a judgment as to whether or not an object has entered or departed from the aura of another object is formed independently, reciprocally and individually for each other object. To put it concretely, following a movement of an object A, a departure of an object B from the aura of the object A and a departure of the object A from the aura of an object C are detected. In addition, an inclusion of an object D into the aura of the object A and an entry of the object A into the aura of the object D are detected.

In addition, in this embodiment, the object information is referred to during the departure detection processing and the matrix object management table is referenced in the entry detection processing. Since the number (n) of other objects sensed by a particular object is generally smaller than the total number (N) of objects existing in the 3-dimensional virtual space (N > n). however, the departure detection processing can be specially carried out at a high speed.

It should be noted that a computer program including computer program code means to be executed to carry out the various kinds of processing described above is presented to the user through computer-readable presentation media which can be network presentation media such as the Internet and a digital satellite or information recording media such as a CD-ROM and a magnetic disc.

It should be understood that various alternatives to the embodiments of the invention described herein may be employed in practicing the invention. It is intended that the following claims define the scope of the invention and that structures within the scope of these claims and their equivalents are covered thereby.

## Claims

1. An information processing apparatus for operating a plurality of objects in a 3-dimensional virtual space and moving said plurality of objects in said 3-dimensional virtual space, comprising:
a list management means for controlling a first list prepared for each of said plurality of objects to enlist a first group of one or more other of said plurality of objects contained in an aura of a first object of said plurality of objects, and for controlling a second list prepared for said each of said plurality of objects to enlist a second group of said one or more other of said plurality of objects each having an aura containing said first object;
a matrix table management means for controlling a status of inclusion of said each of said plurality of objects in an aura of each other of said plurality of objects by using a matrix table; and
a judgment means for forming a judgment as to whether said first object has entered or departed from said aura of said each other of said plurality of objects by referring to said matrix cable, said first list and said second list.

2. An information processing apparatus according to claim 1, wherein said aura of said each other of said plurality of objects includes at least one of a sight aura and a hearing aura.

3. An information processing apparatus according to claim 1 or 2, wherein said judgement means forms said judgement as to whether or not said first object has entered or departed from said aura of said each other of said plurality of objects independently, reciprocally and individually for said each other of said plurality of objects.

4. An information processing apparatus according to any one of the preceding claims wherein said status of inclusion of said each of said plurality of objects in said aura of said each other of said plurality of objects is recorded in said matrix table, in said first and second lists, or in both said matrix table and said first and second lists.

5. An information processing apparatus according to any one of the preceding claims, further comprising communication means for distributing a movement message between said information processing apparatus and a second information processing apparatus, said second information processing apparatus being related to said first object.

6. An information processing apparatus according to any one of the preceding claims further comprising:
departure control means for controlling said list management means, said matrix table management means, and said judgment means during departure detection processing for said plurality of objects; and
entry control means for controlling said list management means, said matrix table management means, and said judgment means during entry detection processing for said plurality of objects.

7. An information processing apparatus according to claim 6, wherein said departure control means comprises:
first selection means for selecting said first group from said first list for said first object;
first determination means for determining whether each of said first group is contained in said aura of said first object;
first update means for updating said first list for said first object, said second list for said each of said first group, and said matrix object management table, in accordance with said first determination means;
second selection means for selecting said second group from said second list for said first object;
second determination means for determining whether said first object is contained in said aura of each of said second group; and
second update means for updating said first list for said each of said second group, said second list for said first object, and said matrix object management table, in accordance with said second determination means.

8. An information processing apparatus according to claim 6 or 7, wherein said entry control means comprises:
selection means for selecting said one or more other of said plurality of objects;
first determination means for determining whether each of said one or more other of said plurality of objects is not enlisted in said first list for said first object, and for determining whether said each of said one or more other of said plurality of objects is contained in said aura of said first object;
first update means for updating said first list for said first object, said second list for said each of said one or more other of said plurality of objects. and said matrix object management table, in accordance with said first determination means;
second determination means for determining whether said first object is not enlisted in said first list for said each of said one at more other of said plurality of objects, and for determining whether said first object is contained in said aura of said each of said one or more other of said plurality of objects; and
second update means for updating said first list for said each of said one or more other of said plurality of objects, said second list for said first object, and said matrix object management table, in accordance with said second determination means.

9. An information processing method for operating a plurality of objects in a 3-dimensional virtual space and moving said plurality of objects an said 3-dimensional virtual space, comprising the steps of:
a list management step of controlling a first list prepared for each of said plurality of objects to enlist a first group of one or more other of said plurality of objects contained in an aura of a first of said plurality of objects, and of controlling a second list prepared for said each of said plurality of objects to enlist a second group of said one or more other of said plurality of objects each having an aura containing said first object;
a matrix table management step of controlling a status of inclusion of said each of said plurality of objects in an aura of each other of said plurality or objects by using a matrix table; and
a judgment step of forming a judgment as to whether said first object has entered or departed from said aura of said each other of said plurality of objects by referring to said matrix table, said first list and said second list.

10. An information processing method according to claim 9, wherein said aura of said each other of said plurality of objects includes at least one of a sight aura and a hearing aura.

11. The information processing method according to claim 9 or 10, wherein said judgement step forms said judgement as to whether or not said first object has entered or departed from said aura of said each other of said plurality of objects independently, reciprocally and individually for said each other of said plurality of objects.

12. An information processing method according to any one of claims 9 to 11, wherein said status of inclusion of said each of said plurality of objects in said aura of said each other of said plurality of objects is recorded in said matrix table, in said first and second lists, or in both said matrix table and said first and second lists.

13. An information processing method according to any one of claims 9 to 12, further comprising a communication step of distributing a movement message between said information processing apparatus and a second information processing apparatus, said second information processing apparatus being related to said first object.

14. An information processing method according to any one of claims 9 to 13, further composing:
a departure control step of controlling said list management step, said matrix table management step, and said judgment step during departure detection processing for said plurality of objects; and
an entry control step of controlling said list management step, said matrix table management step, and said judgment step during entry detection processing for said plurality of objects.

15. An information processing method according to claim 14, wherein said departure control step comprises:
a first selection step of selecting said first group from said first list for said first object;
a first determination step of determining whether each of said first group is contained in said aura of said first object;
a first update step of updating said first list for said first object, said second list for said each of said first group, and said matrix object management table, in accordance with said first determination step;
a second selection step of selecting said second group from said second list for said first object;
a second determination step of determining whether said first object is contained in said aura of each of said second group; and
a second update step of updating said first list for said each of said second group, said second list for said first object and said matrix object management table, in accordance with said second determination step.

16. An information processing method according to claim 14 or 15, wherein said entry control step comprises:
a selection step of selecting said one or more other of said plurality of objects;
a first determination step of determining whether each of said one or more other of said plurality of objects is not enlisted in said first list for said first object, and of determining whether said each of said one or more other of said plurality of objects is contained in said aura of said first object;
a first update step of updating said first list for said first object, said second list for said each of said one or more other of said plurality of objects, and said matrix object management table, in accordance with said first determination step;
a second determination step of determining whether said first object is not enlisted in said first list for said each of said one or more other of said plurality of objects, and of determining whether said first object is contained in said aura of said each of said one or more other of said plurality of objects; and
a second update step of updating said first list for said each of said one or more other of said plurality of objects, said second list for said first object, and said matrix object management table in accordance with said second determination step.

17. A computer-readable medium for presenting a program executable by a computer to drive an information processing apparatus to perform an information processing method according to any one of claims 9 to 16.

18. A computer program which when executed on a computer causes the computer to perform an information processing method according to any one of claims 9 to 16.

19. An information processing apparatus for operating a plurality of objects in a 3-dimensional virtual space and moving said plurality of objects in said 3-dimensional virtual space, comprising:
a storage element configured to store a first list prepared for each of said plurality of objects to enlist a first group of one or more other of said plurality of objects contained in an aura of a first object, to store a second list prepared for said each of said plurality of objects to enlist a second group of said one or more other of said plurality of objects each having an aura containing said first object, and to store a matrix table used for controlling a status of inclusion of each of said plurality of objects in an aura of each other of said plurality of objects; and
a processor, coupled to said storage clement, said processor being configured to update said first list, said second list, and said matrix table according to movements of said plurality of objects, wherein said processor is further configured to form a judgment as to whether said first object has entered or departed from said aura of said each other of said plurality of objects by refering to said matrix table, said first list and said second list.

20. An information processing apparatus according to claim 19, wherein said aura of said each other of said plurality of objects includes at least one of a sight aura and a hearing aura.

21. An information processing apparatus according to claim 19 or 20, wherein said processor is further configured to form said judgement as to whether or not said first object has entered or departed from said aura of said each other of said plurality of objects independently, reciprocally and individually for said each other of said plurality of objects.

22. An information processing apparatus according to any one of claims 19 to 21, wherein said status of inclusion of said each of said plurality of objects in said aura of said each other of said plurality of objects is stored in said matrix table, in said first and second lists, or in both said matrix table and said first and second lists.

23. An information processing apparatus according to any one of claims 19 to 22, wherein:
said processor is further configured to distribute a movement message between said information processing apparatus and a second information processing apparatus, said second information processing apparatus being related to said first object.

24. An information processing apparatus according to any one of claims 19 to 23, wherein:
said processor is further configured to perform departure detection processing and entry detection processing for said plurality of objects.

25. An information processing apparatus according to claim 24, wherein said processor is configured to operate as follows during said departure detection processing:
to perform first selection processing to select said first group from said first list for said first object;
to perform first determination processing to determine whether each of said first group is contained in said aura of said first object;
to perform first update processing to update said first list for said first object, said second list for said each of said first group, and said matrix object management table, in accordance with said first determination processing:
to perform second selection processing to select said second group from said second list for said first object;
to perform second determination processing to determine whether said first object is contained in said aura of each of said second group; and
to perform second update processing to update said first list for said each of said second group, said second list for said first object, and said matrix object management table, in accordance with said second determination processing.

26. An information processing apparatus according to claim 24 or 25, wherein said processor is configured to operate as follows during said entry detection processing:
to perform selection processing to select said one or more other of said plurality of objects;
to perform first determination processing to determine whether each of said one or more other of said plurality of objects is not enlisted in said first list for said first object, and for determining whether said each of said one or more other of said plurality of objects is contained in said aura of said first object;
to perform first update processing to update said first list for said first object, said second list for said each of said one or more other of said plurality of objects, and said matrix object management table, in accordance with said first determination processing:
to perform second determination processing to determine whether said first object is not enlisted in said first list for said each of said one or more other of said plurality of objects, and for determining whether said first object is contained in said aura of said each of said one or more other of said plurality of objects; and
to perform second update processing to update said first list for said each of said one or more other of said plurality of objects, said second list for said first object, and said matrix object management table, in accordance with said second determination processing.
